## Europäisches Patentamt

## European Patent Office

## Office européen des brevets

(19)

(11) Veröffentlichungsnummer : **0 004 620**
**B2**

(12) **NEUE EUROPÄISCHE PATENTSCHRIFT**

(45) Veröffentlichungstag der neuen Patentschrift :
**19.12.84**

(51) Int. Cl.³ : **A 22 C 11/02, B 65 B 3/04**

(21) Anmeldenummer : **79100898.0**

(22) Anmeldetag : **24.03.79**

(54) Verfahren zum gleichzeitigen Befüllen und Wenden einer schlauchförmigen, außenbeschichteten Verpackungshülle.

(30) Priorität : **31.03.78 DE 2813847**

(43) Veröffentlichungstag der Anmeldung :
**17.10.79 Patentblatt 79/21**

(45) Bekanntmachung des Hinweises auf die Patenter-teilung : **13.05.81 Patentblatt 81/19**

(45) Bekanntmachung des Hinweises auf die Entscheidung über den Einspruch : **19.12.84 Patentblatt 84/51**

(84) Benannte Vertragsstaaten :
**BE CH DE FR GB IT NL SE**

(56) Entgegenhaltungen :
**DE-A- 2 254 731**
**DE-A- 2 257 731**
**DE-B- 1 142 297**
**US-A- 4 007 761**

(73) Patentinhaber : **HOECHST AKTIENGESELLSCHAFT**
**Postfach 80 03 20**
**D-6230 Frankfurt am Main 80 (DE)**

(72) Erfinder : **Becker, Reinhold, Dr.**
**Am Hohen Stein 18**
**D-6200 Wiesbaden (DE)**

## Beschreibung

Die Erfindung betrifft ein Verfahren zum gleichzeitigen Befüllen mit Füllgut und Wenden einer flexiblen, außenbeschichteten Verpackungshülle, bei dem man von einem Hohlstab aus gefältelter Schlauchhülle ausgeht, einen kurzen Hohlstabendabschnitt durch längsweises Auseinanderziehen von Raffalten befreit, den raffaltenfreien Schlauchhüllenabschnitt verschließt, danach den Hohlstab mit dem raffaltenfreien, geraden Schlauchstück auf einen geraden, formfesten Rohrkörper aufschiebt und durch den Hohlraum des Rohrkörpers dann fortlaufend Füllmasse in das raffaltenfreie, endseitig verschlossene Schlauchrohr in Richtung auf seinen Verschluß einpreßt und dabei zugleich die den Hohlstab bildende geraffte Schlauchhülle nach Maßgabe des Füllgutausstoßes fortlaufend weiter entfältelt und den raffaltenfreien Schlauchhüllenabschnitt zugleich fortlaufend um 180° nach innen wendet. Ein Verfahren dieser Art ist beispielsweise aus der US-A-4 007 761 bekannt. Bei ihm wird jedoch die Verpackungshülle bereits vor dem Füllvorgang teilweise entfältelt und umgestülpt.

Im Gegensatz dazu liegt der Erfindung die Aufgabe zugrunde, ein Verfahren der eingangs angegebenen Art vorzuschlagen, das es dem Benutzer von schlauchförmigen Verpackungshüllen mit einem Überzug auf ihrer Außenseite, die in Gestalt eines durch längsweise Raffung der schlauchförmigen Verpackungshülle, insbesondere künstlicher Wursthüllen, gebildeten Hohlstabs vorliegen, ermöglicht, je nach Eigenart des Füllgutes, insbesondere der stofflichen Eigenart von Wurstmasse als Füllgut, entweder den Überzug der Schlauchhülle oder aber die überzugsfreie Seite der Schlauchhülle an das Füllgut angrenzen zu lassen, und bei dem Änderungen des Füllkalibers während des Füllens vermieden werden.

Die der Erfindung zugrunde liegende Aufgabe wird dadurch gelöst, daß man den Hohlstab vor dem Entfälteln des Hohlstabendabschnitts und Schließen des entfälteten Schlauchstücks auf ein hohlzylinderförmiges Stützelement aufschiebt, das hohlzylinderförmige Stützelement mit dem auf seiner Außenseite angeordneten Hohlstab — mit dem entfälteten, endseitig verschlossenen Schlauchstück voran — auf und über einen Rohrkörper schiebt und danach durch den Hohlraum des Rohrkörpers Füllmasse in das raffaltenfreie, endseitig verschlossene Schlauchrohr im Stabhohlraum preßt und die den Hohlstab bildende geraffte Schlauchhülle dabei nach Maßgabe des Füllgutausstosses fortlaufend entfältelt und dabei den Schlauch um 180° nach innen umwendet.

Das erfindungsgemäße Verfahren findet insbesondere vorteilhaft Anwendung bei der Herstellung von Würsten ; insbesondere bevorzugt sind dabei schlauchförmige künstliche Wursthüllen aus Cellulosehydrat, vorteilhaft solche, die eine Faserverstärkung aufweisen, bei denen auf der ursprünglichen Schlauchaußenseite ein Überzug aus synthetischem Polymerisat angeordnet ist, beispielsweise ein solcher aus Vinylidenchloridcopolymerisat, der die Außenseite des Hohlstabs bildet.

Sofern der Wursthersteller Würste herzustellen wünscht, bei denen die künstliche Wursthülle einen Überzug auf der Außenseite aufweist, verwendet er den Hohlstab aus außenbeschichteter schlauchförmiger Verpackungshülle in üblicher Weise, anderenfalls wendet er das Verfahren gemäß der Erfindung an.

Bei dem Verfahren nach der Erfindung finden die nach Maßgabe des Füllgutausstoßes erfolgende fortlaufende Entfältelung und Umstülpung unter Bedingungen statt, die einen reibschlüssigen Kontakt zwischen dem raffaltenfreien Schlauchrohr im Stabhohlraum und der Hohlstabinnenseite verhindern.

Nachfolgend wird die Durchführung des Verfahrens ausführlicher beschrieben.

Gemäß der Erfindung führt man zunächst in den Hohlraum des Stabs aus geraffter Schlauchhülle ein formfestes hohlzylinderförmiges Stützelement ein. Die Länge des hohlzylinderförmigen Stützelementes entspricht bevorzugt der Hohlstablänge, der Außendurchmeser des Stützelementes ist geringfügig kleiner als der Durchmesser des Stabhohlraums. Die Länge des Hohlstabs entspricht wenigstens der Länge des Rohrkörpers (Füllrohr). Bei Stützelementen mit trichterförmig ausgebildetem Ende entspricht der zylindrische Teil des Stützelementes wenigstens der Hohlstablänge.

Dann wird der Hohlstab an einem Ende teilweise so weit entfältelt, daß der gebildete raffaltenfreie Schlauchhüllenabschnitt über das ihm benachbarte Ende des Stützelementes hinreichend weitgehend hinausragt. Der raffaltenfreie Schlauchabschnitt wird verschlossen. Das hohlzylinderförmige Stützelement mit dem auf ihm angeordneten Hohlstab wird dann — mit dem Verschluß des entfälteten Schlauchstücks voran — auf und über einen geraden festen Rohrkörper — das Füllrohr einer Maschine zum Abfüllen von Füllgut — geschoben. Bei dieser Schiebebewegung sind hohlzylinderförmiges Stützelement und Rohrkörper derart zueinander angeordnet, daß ihre Längsachsen fluchten.

Hierdurch ergibt sich eine Ausbildung, bei der das Füllrohr vom Stützelement umschlossen wird und sich zwischen der Innenseite des Stützelementes und der Außenseite des Füllrohres die raffaltenfreie Schlauchhülle befindet, die die Austrittsöffnung des Füllrohrs überdeckt.

Danach wird durch das Füllrohr Füllgut, beispielsweise Wurstmasse, in das raffaltenfreie Schlauchrohr im Stabhohlraum in Richtung auf den Verschluß des Schlauchrohrs zu gepreßt ; dadurch wird das raffaltenfreie Schlauchrohr zwischen Füllrohr und Stützelement in Einpreßrichtung der Füllmasse längsaxial vorgeschoben und dabei gleichzeitig eine weitere Entfältelung des Hohlstabs und Umstülpung des entfältelten Schlauchs nach innen bewirkt.

Das umgestülpte, raffaltenfreie Schlauchrohr steht dabei nicht in Reibkontakt mit der Innenseite des sich durch fortlaufende Entraffung stetig verkürzenden Hohlstabs, sondern in Kontakt mit der Innenseite des Stützelementes und der Außenseite des Füllrohrs.

Bei der Durchführung des Verfahrens bleibt daher die auf das raffaltenfreie Schlauchrohr wirkende Reibkraft während des gesamten Verfahrensablaufs konstant, unabhängig von der jeweiligen Hohlstablänge.

Sofern im Stabhohlraum das hohlzylinderförmige Stützelement angeordnet ist, ist mit der Bezeichnung « Stabhohlraum » definitionsgemäß der Hohlraum des zylindrischen Stützelementes in diesem gemeint.

Das Einpressen von Füllgut in das raffaltenfreie Schlauchrohr des Hohlstabs wird bis zur völligen Entraffung der den Hohlstab bildenden Schlauchhülle durchgeführt, dabei wird die Schlauchhülle über ihre gesamte Länge derart gewendet, daß nach Durchführung des Verfahrens die ursprüngliche Außenschicht des Schlauchs nach seiner Umstülpung die Innenseite desselben bildet und damit an das Füllgut im Schlauchhohlraum angrenzt.

Das Aufschieben des Hohlstabs auf den Rohrkörper — das Füllrohr der Abfüllmaschine für Wurstmasse — kann beispielsweise von Hand erfolgen.

Es ist zweckmäßig, den Hohlstab so weit über das Füllrohr zu schieben, daß ein hinreichend langes Stück des raffaltenfreien Schlauchrohrs, auf dem Füllrohr aufliegend, außerhalb des Stabhohlraums zu liegen kommt.

Um unerwünschtes Eindringen von Wurstmasse zwischen Außenseite des Füllrohrs und entfälteltem Schlauch zu vermeiden, verengt man vorteilhaft am Ende des Füllrohrs den Spalt zwischen der Außenseite des Füllrohrs und dem Schlauch so weitgehend, daß der unerwünschte Effekt unterbunden wird, der Schlauch jedoch noch über die Füllrohraußenseite hinweg zu gleiten vermag. Zum Anpressen der Schlauchhülle verwendet man eine Vorrichtung in Gestalt eines Kreisringkörpers, der am Füllrohrende angeordnet ist und das Füllrohrende unter Bildung eines hinreichend dimensionierten Spalts umschließt.

Derartige Vorrichtungen sind unter der Bezeichnung « Schlauchbremse » bekannt. Die Schlauchbremse am Ende des Füllrohrs bewirkt zugleich, daß der Hohlstab gegen Verschiebung in Richtung auf das Füllrohrende zu gesichert ist.

Die Schlauchbremse wird um den Rohrkörper und die ihn umgebende Schlauchhülle befestigt, nachdem der Hohlstab hinreichend weit über das Füllrohr geschoben worden ist, so daß dieses teilweise aus dem Hohlraum des Hohlstabs, umhüllt von dem raffaltenfreien Schlauchrohr, ausgetreten ist.

Vorteile des Verfahrens : Es ist häufig erwünscht, daß sich die Schlauchhülle beim Befüllen mit Füllgut mehr oder weniger stark radial dehnt. Um diesen Effekt zu erreichen und das Eindringen von Wurstmasse zwischen Füllrohr und Schlauchhülle zu vermeiden, werden die genannten Schlauchbremsen verwendet. Beim erfindungsgemäßen Befüllen der zum Hohlstab gerafften Schlauchhüllen entsteht eine zusätzliche Bremskraft durch die Reibung zwischen Schlauchhülle und Hohlstabinnenseite.

Diese Bremskraft ist jedoch nicht konstant, sondern nimmt während des Füllvorgangs, d. h. während des Abarbeitens des Hohlstabs infolge stetiger weiterer Entfältelung und der damit verbundenen zunehmenden Verkürzung der Hohlstablänge, stetig ab.

Dies kann bei leicht dehnbaren Hüllen in unerwünschter Weise zu ungleichmäßigem — anfänglich großem und gegen Verfahrensende kleinem — Füllkaliber führen.

Bei dem Verfahren nach der Erfindung bleibt durch die vorgegebene Länge des Stützelementes die auf das sich zwischen dem hohlen Zylinderkörper und dem Rohrkörper befindliche entfältelte Schlauchstück wirkende Reibkraft konstant.

Infolge der Funktion des Stützelementes im Hohlstabhohlraum bleibt das Füllkaliber des Schlauchs auch bei stark dehnbarer Schlauchhülle oder schwach eingestellter Schlauchbremse während des gesamten Abfüllvorgangs, d. h. bis zur Entraffung, Umstülpung sowie Befüllung der gesamten Länge des den Hohlstab bildenden Schlauchs, konstant.

Das hohlzylinderförmige Stützelement ist vorteilhaft an dem Ende, über das die entfältelte Schlauchhülle nach innen umgestülpt wird, verdickt und abgerundet ausgebildet, um den Umstülpvorgang zu erleichtern.

Eine vorteilhafte Abwandlung des Verfahrens besteht darin, daß man dabei ein hohlzylinderförmiges Stützelement verwendet, das an seinem einen Ende trichterartig erweitert ist.

Bei dieser Abwandlung geht man so vor, daß man zunächst das Stützelement mit seinem zylindrischen Teil voran in den Hohlraum des Hohlstabs einschiebt, den Hohlstab an demjenigen Ende, das der konusartigen Erweiterung des Hohlzylinders benachbart ist, teilweise entfältelt und über den konusartig ausgebildeten Teil des Zylinderkörpers hinwegzieht, das raffaltenfreie Schlauchstück dann verschließt und danach den hohlen Zylinderkörper mit dem konisch erweiterten Bereich voran auf und über das Füllrohr schiebt.

Die weitere Verfahrensdurchführung entspricht derjenigen, bei der ein Hohlzylinderkörper verwendet wird, der einen über seine gesamte Länge gleichbleibenden Querschnitt aufweist.

Die Durchführung der erfindungsgemäßen Verfahren wird beispielhaft durch die Zeichnung erläutert. Das Stützelement ist in den Figuren 1 bis 5 nicht dargestellt.

In Figur 1 der Zeichnung ist ein durch längsaxiales Raffen einer Schlauchhülle gebildeter Hohlstab dargestellt, dessen Endabschnitt teilweise entfältelt ist, wobei der entfältelte Schlauchhüllenabschnitt raffaltenfrei ist.

Figur 2 zeigt einen Hohlstab gemäß Fig. 1, bei dem der raffaltenfreie Schlauchhüllenabschnitt endseitig durch Verknotung verschlossen ist.

Figur 3 zeigt den Hohlstab gemäß Fig. 2 beim Aufschieben — mit seinem entfältelten Bereich 2 und Verknotung 3 voran — auf einem formfesten Rohrkörper.

Figur 4 zeigt eine Arbeitsphase, die sich an die gemäß Fig. 3 anschließt.

Figur 5 zeigt die Arbeitsphase nach Einpressen von Wurstmasse in das raffaltenfreie Schlauchrohr im Stabhohlraum ; bei der dargestellten Arbeitsphase ist der Verschluß 3 bereits von diesem abgetrennt und durch einen üblichen Clipverschluß ersetzt.

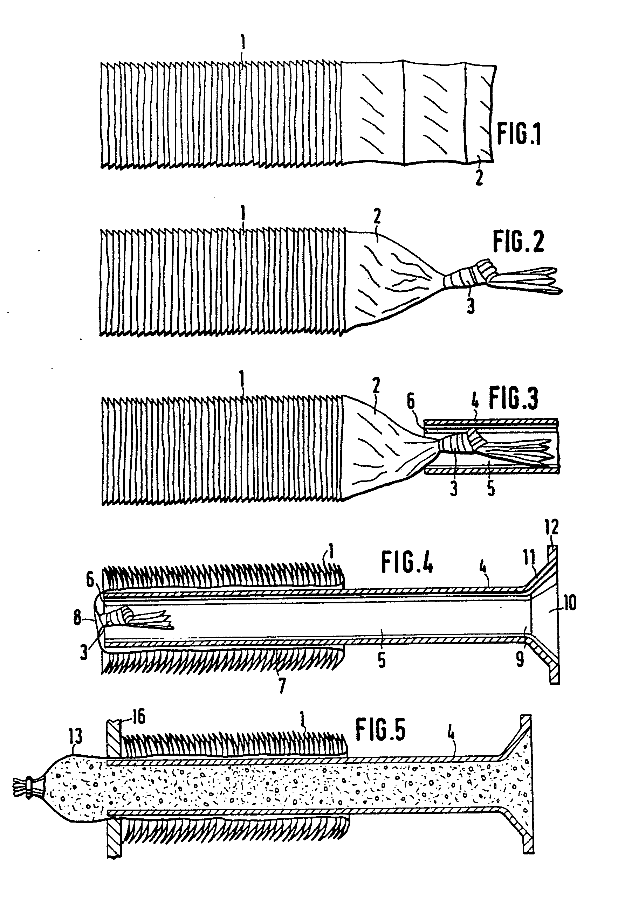

In Fig. 1 bedeutet 1 den Hohlstab aus längsweise geraffter Schlauchhülle, 2 bedeutet einen raffaltenfreien Schlauchhüllenabschnitt am Anfang des Hohlstabs 1, der durch teilweises Entfälteln des Hohlstabs entstanden ist.

In Fig. 2 bedeutet 3 einen Verschluß des raffaltenfreien Schlauchhüllenabschnitts in Gestalt eines Knotens.

In Fig. 3 bedeutet 4 einen rohrförmigen Körper. Der Rohranfang ist aus Gründen zeichnerischer Vereinfachung nicht dargestellt. 5 bedeutet den Hohlraum des Rohrkörpers und 6 seine Mündungsöffnung, die auch als Austrittsöffnung (für das Füllgut) bezeichnet wird.

In Fig. 4 bedeutet 7 das mit dem Hohlstab 1 verbundene raffaltenfreie Schlauchrohr, das aus der gleichen Schlauchhülle besteht, aus der der Hohlstab gebildet ist, und durch teilweise Entraffung desselben unter gleichzeitigem Umwenden des jeweils entrafften Schlauchhüllenabschnitts gebildet ist. Das raffaltenfreie Schlauchrohr grenzt einerseits an die Außenseite des Rohrkörpers und andererseits an die Innenseite des Hohlstabs an. 8 ist derjenige Bereich des raffaltenfreien Schlauchrohrs, der die Mündungsöffnung 6 des Rohrkörpers vollflächig überdeckt. 9 ist der Rohrkörperanfang mit seiner Eintrittsöffnung 10 (für Füllgut). Der Rohrkörper läuft anfangsseitig trichterförmig aus. Das trichterförmige Element 11 ist mit seinem umlaufenden Flanschrand 12 an einer in der Fig. 4 nicht dargestellten Abfüllmaschine für Wurstmasse befestigt.

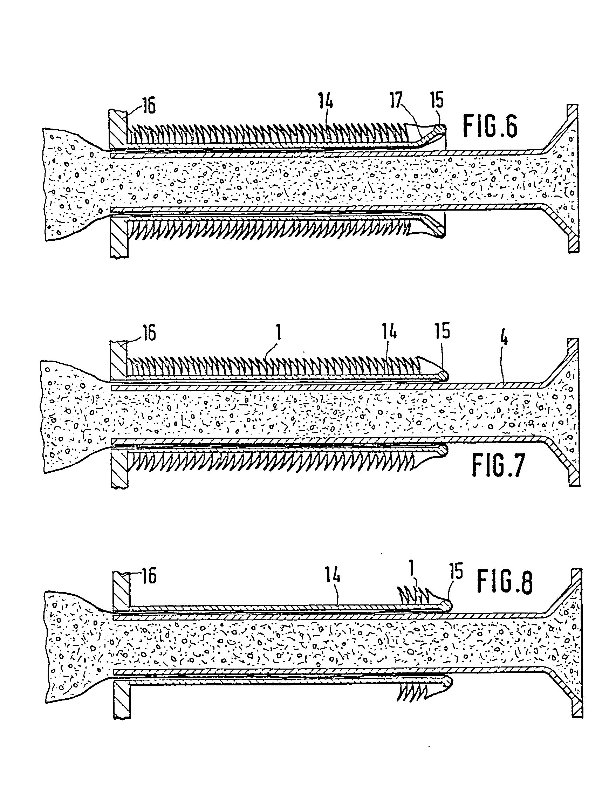

In Fig. 5 ist die Arbeitsphase unmittelbar nach Einpressen der Füllmasse durch das Füllrohr in Richtung auf den Verschluß am raffaltenfreien Schlauchrohr dargestellt. 13 bedeutet dabei die mit Füllmasse gefüllte Schlauchhülle, wobei die die ursprüngliche Außenseite der Hülle bildende Schicht, beispielsweise aus Vinylidenchloridcopolymerisat, bei dem gewendeten und gefüllten Schlauch die Innenseite desselben bildet, an die die Füllmasse unmittelbar angrenzt.

In den Figuren 6 bis 8 ist auch das Stützelement dargestellt, durch das der unmittelbare Kontakt zwischen dem entfältelten Schlauchrohr und der Hohlstabinnenseite vermieden wird.

In den Figuren 6, 7 und 8 bedeutet dabei jeweils 14 ein Stützelement in Gestalt eines formfesten Hohlzylinders, der nach Fig. 6 mit einem verdickten, abgerundet ausgebildeten Ende 15 und konischer Aufweitung 17 versehen ist.

In den Figuren 5 bis 8 bedeutet 16 eine Schlauchbremse.

## Anspruch

Verfahren zum gleichzeitigen Befüllen mit Füllgut und Wenden einer flexiblen, außenbeschichteten Verpackungshülle, bei dem man von einem Hohlstab (1) aus gefälteter Schlauchhülle ausgeht, einen kurzen Hohlstabendabschnitt durch längsweises Auseinanderziehen von Raffalten befreit, den raffaltenfreien Schlauchhüllenabschnitt verschließt, danach den Hohlstab (1) mit dem raffaltenfreien, geraden Schlauchstück (2) auf einen geraden, formfesten Rohrkörper (4) aufschiebt und durch den Hohlraum (5) des Rohrkörpers dann fortlaufend Füllmasse in das raffaltenfreie, endseitig verschlossene Schlauchrohr in Richtung auf seinen Verschluß einpreßt und dabei zugleich die den Hohlstab (1) bildende geraffte Schlauchhülle nach Maßgabe des Füllgutausstoßes fortlaufend weiter entfältelt und den raffaltenfreien Schlauchhüllenabschnitt zugleich fortlaufend um 180° nach innen wendet, dadurch gekennzeichnet, daß man den Hohlstab (1) vor dem Entfälteln des Hohlstabendabschnitts und Schließen des entfältelten Schlauchstücks (2) auf ein hohlzylinderförmiges Stützelement (14) aufschiebt, das hohlzylinderförmige Stützelement (14) mit dem auf seiner Außenseite angeordneten Hohlstab (1) — mit dem entfältelten, endseitig verschlossenen Schlauchstück (2) voran — auf und über einen Rohrkörper (4) schiebt und danach durch den Hohlraum (5) des Rohrkörpers (4) Füllmasse in das raffaltenfreie, endseitig verschlossene Schlauchrohr (2) im Stabhohlraum preßt und die den Hohlstab (1) bildende geraffte Schlauchhülle dabei nach Maßgabe des Füllgutausstoßes fortlaufend entfältelt und dabei den Schlauch um 180° nach innen umwendet.

## Claim

Process for simultaneously filling with a filling mass and turning a flexible packaging casing with an outside coating, which comprises using a hollow stick (1) formed of a shirred tubular casing, deshirring a short end section of the hollow stick by extending it in the longitudinal direction, closing the deshirred section of the tubular casing, thereafter pushing the hollow stick (1) comprising the deshirred, straight tube section (2) upon a straight, dimensionally stable tubular body (4) and then continuously pressing a filling mass through the cavity (5) of the tubular body into the deshirred tubing closed at the end, in the direction of its closure and, in the process, continuously further deshirring the shirred tubular casing forming the hollow stick (1), in accordance with the quantity of filling mass discharged and, at the same time, continuously turning the deshirred section of the tubular casing by 180° to place its outside surface on the inside, characterised in that the hollow stick (1) is placed on a hollow-cylindrical supporting element (14) before deshirring the end section of the hollow stick and closing the deshirred tube section (2), the hollow-cylindrical supporting element (14) with the hollow stick (1) arranged on its outside is pushed over and around a tubular body (4) — with the deshirred tube section (2) closed at the end facing forward — and, thereafter, a filling mass is pressed through the cavity (5) of the tubular body (4) into the deshirred tube section (2) closed at its end, which is in the cavity of the shirred stick, and the shirred tubular casing forming the hollow stick (1) is thereby continuously deshirred, in accordance with the quantity of filling mass discharged, and the tubing is, at the same time, turned by 180° to place its outside surface on the inside.

### Revendication

Procédé pour remplir avec une matière de remplissage et simultanément retourner une enveloppe d'emballage flexible portant un revêtement extérieur, dans lequel on part d'une tige creuse (1) constituée par une enveloppe tubulaire plissée, on déplisse une courte portion terminale de la tige creuse par étirage des plis dans le sens longitudinal, on ferme la portion déplissée de l'enveloppe tubulaire, ensuite on glisse la tige creuse (1) par la portion de tuyau rectiligne déplissée (2) sur un corps tubulaire rigide rectiligne (4) et, par la cavité (5) du corps tubulaire, on introduit ensuite par compression en continu de la matière de remplissage, dans le tuyau déplissé fermé à son extrémité en direction de la fermeture, et en même temps, on continue à déplisser en continu l'enveloppe tubulaire plissée qui forme la tige creuse (1) au fur et à mesure de l'arrivée de matière de remplissage et à retourner en continu la portion d'enveloppe tubulaire déplissée de 180° vers l'intérieur, procédé caractérisé en ce qu'avant le déplissage de la portion terminale de la tige creuse et la fermeture de la portion de tuyau déplissée (2), on glisse la tige creuse (1) sur un élément de soutien (14) en forme de cylindre creux, la tige creuse (1) étant disposée sur la face externe de l'élément de soutien en forme de cylindre creux (14) — avec la portion de tuyau déplissée fermée à l'extrémité (2) en avant — sur un corps tubulaire (4) et ensuite on introduit par compression de la matière de remplissage, par la cavité (5) du corps tubulaire (4) dans le tuyau déplissé fermé à l'extrémité (2) dans la cavité de la tige et on déplisse en continu l'enveloppe tubulaire plissée constituant la tige creuse (1), au fur et à mesure de l'arrivée de matière de remplissage tout en retournant le tuyau de 180° vers l'intérieur.

FIG.1

FIG.2

FIG.3

FIG.4

FIG.5

FIG.6

FIG.7

FIG.8